# EUROPEAN PATENT SPECIFICATION

(11) **EP 0 620 964 B1**
(45) Date of publication and mention of the grant of the patent: **03.03.1999**
(21) Application number: 94302835.7
(22) Date of filing: 21.04.1994
(51) Int. Cl.: A01D 34/68, F16D 67/02

(54) **Improvements in and relating to a clutch and brake assembly**
Kupplungs-und Bremsvorrichtung
Mécanisme d'embrayage et de freinage

(30) Priority: 23.04.1993 GB 9308450
(43) Date of publication of application: 26.10.1994
(73) Proprietor: ELECTROLUX OUTDOOR PRODUCTS LIMITED, Newton Aycliffe, Co Durham DL5 6UP (GB)
(72) Inventor: Bowden, Michael, Newton Aycliffe, Co Durham DL5 4RS (GB)
(74) Representative: Arthur, Bryan Edward

(56) References cited:
- DE-A- 2 804 799
- FR-A- 2 339 775
- US-A- 4 035 994
- US-A- 4 369 616
- US-A- 4 416 107
- US-A- 4 667 786

## Description

This invention relates to a clutch and brake assembly and, more particularly to a rotary mower of the type driven by an internal combustion engine including the clutch and brake assembly. Such mowers generally comprise a main body or deck upon which an internal combustion engine is mounted. The engine crankshaft or an output shaft passes through the mower deck and supports a cutting blade which is rotatable in a horizontal plane within the deck. Where the cutting blade is directly mounted to the crankshaft or the output shaft and when the mower is left unattended while the engine is operating, for instance, to empty a removable grass collection receptacle, a potentially serious safety hazard may present itself. This is due to a person sometimes having unimpeded access to the cutting blade via a grass cutting delivery chute extending from beneath the deck and to the grass collection receptacle. In order to avoid such a potential hazard, a user is not infrequently advised to stop the engine each time the grass collection receptacle is to be emptied. Where, however, a rotary mower is powered by a hand-start internal combustion engine, such a stopping procedure results in considerable manual effort each time the engine is re-started and causes premature wear to certain engine components.

Certain devices have been proposed to overcome the above problems by the use of a clutch and brake mechanism to disengage drive, and apply a braking force to the blade and associated components. Many of these devices however tend to be complicated, expensive, require separate control cables and levers and, in particular, are prone to ingress of dirt and debris which reduces their effectiveness.

A known lawnmower is disclosed in US4369616 in which a motor drives an output drive shaft which in turn drives a centrifugal clutch. When the drive shaft is driven above a certain speed, the centrifugal clutch extends outwardly to engage with a tapered frusto-conical contact surface so as to drive a cutter blade. The frusto-conical contact surface includes a brake shoe which is resiliently held against a fixed braking surface. When the centrifugal clutch is thrown outwardly to meet the frustoconical contact surface, the surface is longitudinally displaced so as to move the brake shoe away from the braking surface.

It is an object of the present invention to overcome or at least reduce many of the problems identified above, and to produce a totally enclosed unit preventing ingress of dirt and debris.

According to the present invention, a clutch and brake assembly comprises a rotatable body, a centrifugal clutch including a clutch element which is movable between an inoperative non-driving position and an operative driving position,
a stationary abutment and
a brake member mounted on the rotatable body, which brake member is resiliently biassed towards engagement with the stationary abutment when the clutch element is disengaged from the rotatable body and is movable into disengagement relative to the stationary abutment by the centrifugal clutch when the clutch element is engaged in an operative driving position with the rotatable body, characterised in that the rotatable body is a drum, and in that the clutch element is arranged to act directly on the brake member to cause it to move relative to the rotatable body and into disengagement relative to the stationary abutment.

Preferably, the brake member is a band fixed to the drum at one end and attached resiliently to the drum at the distal end.

A clutch and brake assembly in accordance with the present invention and incorporated in a rotary mower will now be described, by way of example, with reference to the accompanying drawings in which:
Figure 1, is a longitudinal cross-section of a wheeled rotary mower.
Figure 2, is an enlargement of the clutch and brake assembly of Figure 1, and
Figures 3 and 4 are a detailed plan and section (taken on AA of Figure 3) respectively of a clutch drum/brake band assembly incorporated in the mower shown in Figures 1 and 2.

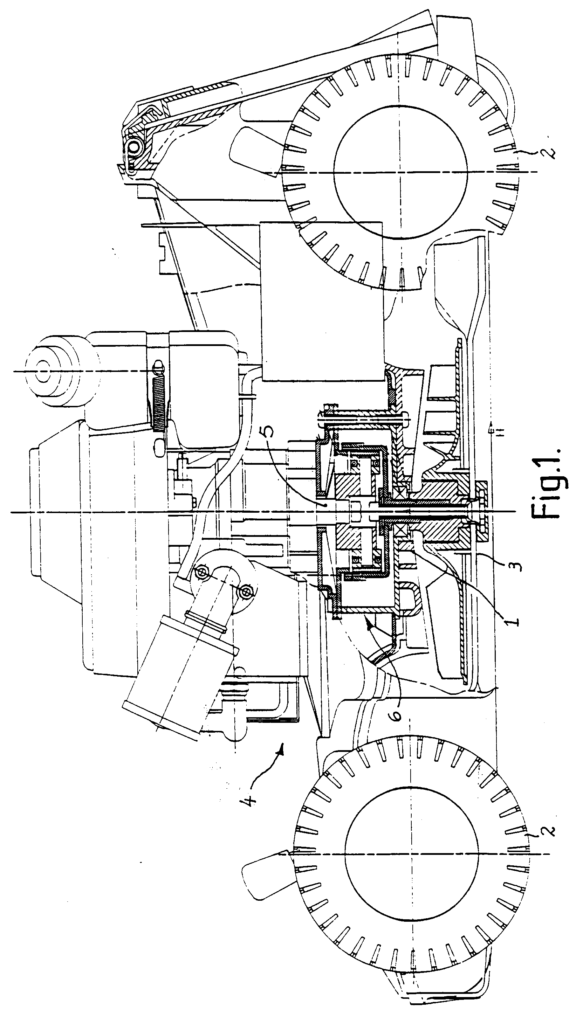

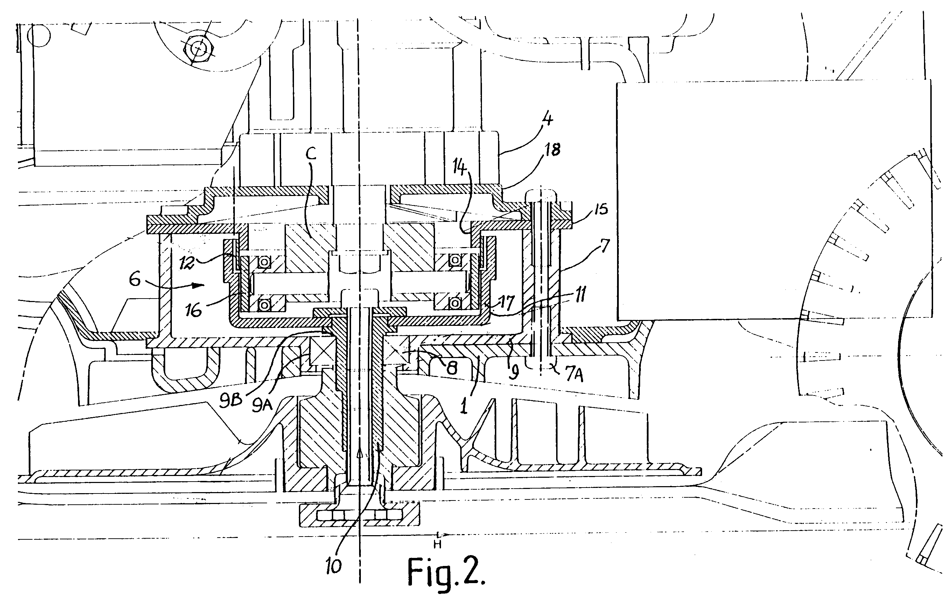

Referring to Figures 1 and 2, a mower deck 1 is conventionally supported on wheels 2. Power for driving the mower and a rotatable cutting blade 3 is obtained from an internal combustion engine generally designated 4. If desired, the internal combustion engine 4 may be used solely for driving the cutting blade 3, in which case the mower is manually propelled by a user.

The cutting blade 3 is mounted coaxially relative to the engine crankshaft or output shaft 5 and interposed in a drive-line between the shaft 5 and the cutting blade is a clutch and brake assembly 6 for selectively effecting drive therebetween.

Referring specifically to Figure 2, the clutch and brake assembly 6 has a main casing 7 which is secured by screws 7A to the top of the mower deck 1. The main casing 7 is designed to accept a bearing 8 which is a press fit into a flanged aperture 9A formed in base 9 of the main casing 7. The bearing 8 forms a rotatable support for a rotatable tubular shaft 10.

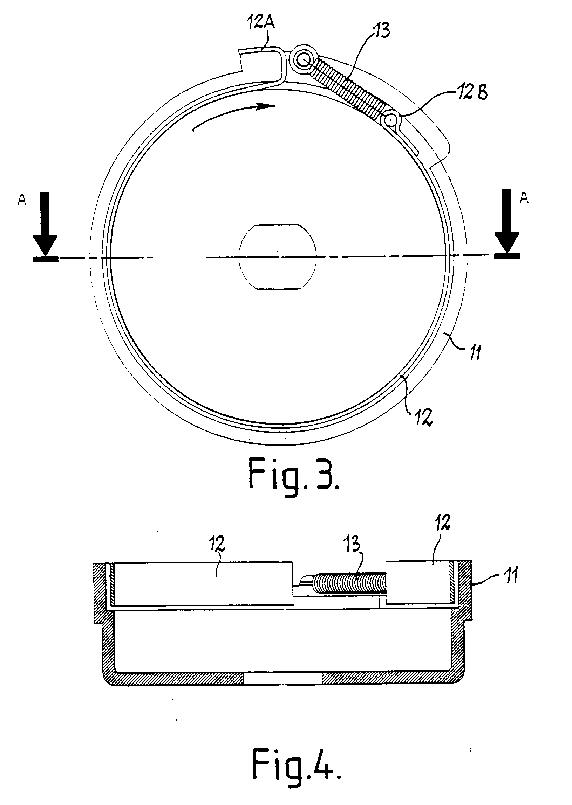

The rotatable tubular shaft 10 is located in the bearing 8 by virtue of a shoulder 9B at the top of the shaft and a circlip (not shown) below the bearing 8. Attached to the top of the shaft 10 is a clutch drum 11. The drum 11 is fixedly attached to the shaft 10 and rotates in unison with it. Attached to the drum 11 is a brake band 12. The brake band 12 is fixed in such a way that its operation as a brake within the assembly is enhanced by its direction of rotation. Leading edge 12A of the brake band 12 (see Figures 3 and 4) is fixed to the drum 11 securely and trailing edge 12B of the brake band 12 is attached to the drum 11 periphery via an extension spring 13. The extension spring 13 acts to tighten the brake band 12 and effectively reduce its diameter, thereby creating the potential to act as a brake device when acting on a flange 14 of a fixed abutment or brake flange 15.

The brake flange 15 is fixed to the casing 7 as shown. The internal combustion engine 4 is fixed to an adaptor plate 18 which is fixed to the casing thereby also fixing the brake flange 14. Fixed to the engine crankshaft 5 is a centrifugal clutch device C. The positioning of clutch device C is such that, in operation, part of a friction surface of a clutch element 16 is parallel to the brake band 12 and the remainder parallel to the drive surface 17 of the clutch.

The operation of the clutch and brake assembly will now be described.

The centrifugal clutch is designed so that when the engine is operating at idle speed the clutch shoes which carry the friction material are held retracted, in this position of the clutch shoes are clear of contact with any other part of the clutch/brake assembly. In this condition the brake band is fully retracted by its extension spring and is held in contact with the stationary brake flange. This in turn prevents the clutch drum from rotating and hence the rotatable shaft and any cutting device fixed to it is also stationary.

In this condition the machine is idling in a safe manner with the blade held stationary by virtue of the brake.

In order to transmit power to the blade the engine speed needs to be increased using the engine throttle. The increase in engine speed increases the centrifugal force acting on the clutch shoes which causes them to move outward against spring pressure which holds them retracted at idle position. This movement effectively increases the diameter of the clutch device and causes it firstly to contact the brake band. This contact causes the brake band to be lifted from the brake flange as the clutch shoes continue to expand with the increase in speed.

As the clutch shoes continue to expand they then contact the drive surface of the clutch drum and begin to drive the drum in unison with the engine.

In this condition the machine is operating with the brake disconnected and the blade at full speed ready to cut grass.

To return the blade to a stationary condition the engine speed is reduced using the engine throttle. This causes the clutch shoes to retract under their biassing spring force and break contact with the clutch drum. As the clutch shoes retract further they also release the band brake which can now operate against the brake flange surface by the action of the brake band extension spring. The braking action is enhanced by virtue of the wrapping action of the brake band caused by the direction of rotation of the clutch drum and brake head.

## Claims

1. A clutch and brake assembly comprising
a rotatable body (11),
a centrifugal clutch (C) including a clutch element (16) which is movable between an inoperative non-driving position and an operative driving position,
a stationary abutment (14) and
a brake member (12) mounted on the rotatable body (11), which brake member (12) is resiliently biassed towards engagement with the stationary abutment (14) when the clutch element (16) is disengaged from the rotatable body (11) and is movable into disengagement relative to the stationary abutment (14) by the centrifugal clutch (C) when the clutch element (16) is engaged in an operative driving position with the rotatable body (11),
characterised in that the rotatable body is a drum (11), and in that the clutch element (16) is arranged to act directly on the brake member (12) to cause it to move relative to the rotatable body and into disengagement relative to the stationary abutment (14).

2. A clutch and brake assembly according to claim 1, characterised in that the clutch element (16) acts on an inner face of the drum (11).

3. A clutch and brake assembly according to claim 2, characterised in that the brake member (12) is a band fixed to the drum (11) at one end, and attached resiliently to the drum (11) at the distal end.

4. A clutch and brake assembly according to claim 3, characterised in that the brake band (12) is resiliently attached for extension in its length.

5. A clutch and brake assembly according to any preceding claim, characterised in that the centrifugal clutch (C) is rotatable by a prime mover.

6. A clutch and brake assembly according to any preceding claim, characterised in that the drum (11) is rotatably connected directly or indirectly to an output shaft (10).

7. A clutch and brake assembly according to any preceding claim, characterised in that the assembly is attached to a rotary lawn mower and wherein the output shaft is connected to a rotatable blade.

## Patentansprüche

1. Kupplungs- und Bremsvorrichtung mit einem drehbaren Körper (11);
einer Zentrifugalkupplung (C), die ein Kupplungselement (16) enthält, welches zwischen einer betriebslosen Nicht-Antriebs-Stellung und einer betriebsfähigen Antriebs-Stellung beweglich ist; einem feststehenden Widerlager (14) und
einem das auf dem drehbaren Körper (11) montierten Bremsglied (12), wobei das Bremsglied (12) in Richtung eines Eingriffs, mit dem feststehenden Widerlager (14) elastisch vorgespannt ist, wenn das Kupplungselement (16) nicht in Eingriff mit dem drehbaren Körper (11) steht, und durch die Zentrifugalkupplung (C) außer Eingriff bezüglich dem feststehenden Widerlager (14) bewegbar ist, wenn das Kupplungselement (16) mit dem drehbaren Körper (11) in einer betriebsfähigen Antriebsstellung in Eingriff ist, dadurch gekennzeichnet, daß
der drehbare Körper eine Trommel (11) ist, und daß das Kupplungselement (16) für ein direktes Angreifen an das Bremsglied (12) zu dessen Bewegung bezüglich des drehbaren Körpers und außer Eingriff bezüglich des feststehenden Widerlagers (14) vorgesehen ist.

2. Kupplungs- und Bremsvorrichtung nach Anspruch 1, dadurch gekennzeichnet, daß das Kupplungselement (16) an die innere Stirnseite der Trommel (11) angreift.

3. Kupplungs- und Bremsvorrichtung nach Anspruch 2, dadurch gekennzeichnet, daß das Bremsglied (12) ein Band ist, welches an einem Ende an der Trommel (11) befestigt und an dem distalen Ende federnd an der Trommel (11) befestigt ist.

4. Kupplungs- und Bremsvorrichtung nach Anspruch 3, dadurch gekennzeichnet, daß das Bremsband (12) zur Längsausdehnung federnd angebracht ist.

5. Kupplungs- und Bremsvorrichtung nach einem der vorhergehenden Ansprüche, dadurch gekennzeichnet, daß die Zentrifugalkupplung (C) durch eine Antriebsmaschine drehbar ist.

6. Kupplungs- und Bremsvorrichtung nach einem der vorhergehenden Ansprüche, dadurch gekennzeichnet, daß die Trommel (11) direkt oder indirekt drehbar mit einer Antriebswelle (10) verbunden ist.

7. Kupplungs- und Bremsvorrichtung nach einem der vorhergehenden Ansprüche, dadurch gekennzeichnet, daß die Vorrichtung an einem Rotationsrasenmäher angebracht ist und die Antriebswelle mit einem drehbaren Messer verbunden ist.

## Revendications

1. Ensemble à frein et embrayage comprenant
un corps mobile en rotation (11),
un embrayage centrifuge (C) comportant un élément d'embrayage (16) qui est mobile entre une position de non entraînement inopérante et une position d'entraînement opérante ;
une butée immobile (14) et
un élément formant frein (12) monté sur le corps mobile en rotation (11), lequel élément formant frein (12) est sollicité de façon élastique pour entrer en coopération avec la butée immobile (14) lorsque l'élément d'embrayage (16) ne coopère pas avec le corps mobile en rotation (11), et est mobile de façon à ne plus coopérer avec la butée immobile (14) par l'embrayage centrifuge (C) lorsque l'élément d'embrayage (16) coopère, dans une position d'entraînement opérante, avec le corps mobile en rotation (11),
caractérisé en ce que le corps mobile en rotation est un cylindre (11), et en ce que l'élément d'embrayage (16) est disposé de façon à agir directement sur l'élément formant frein (12), afin de l'amener à se déplacer par rapport au corps mobile en rotation, et à ne plus coopérer avec la butée immobile (14).

2. Ensemble à frein et embrayage selon la revendication 1, caractérisé en ce que l'élément d'embrayage (16) agit sur une face intérieure du cylindre (11).

3. Ensemble à frein et embrayage selon la revendication 2, caractérisé en ce que l'élément formant frein (12) est une bande fixée sur le cylindre (11) à une extrémité, et attachée de façon élastique au cylindre (11) à l'extrémité distale.

4. Ensemble à frein et embrayage selon la revendication 3, caractérisé en ce que la bande formant frein (12) est attachée de façon élastique de manière à permettre l'extension de sa longueur.

5. Ensemble à frein et embrayage selon l'une quelconque des revendications précédentes, caractérisé en ce que l'embrayage centrifuge (C) est mobile en rotation par un moteur primaire.

6. Ensemble à frein et embrayage selon l'une quelconque des revendications précédentes, caractérisé en ce que le cylindre (11) est relié de façon mobile en rotation directement ou indirectement à un arbre de sortie (10).

7. Ensemble à frein et embrayage selon l'une quelconque des revendications précédentes, caractérisé en ce que l'ensemble est fixé à une tondeuse à gazon rotative, et dans lequel l'arbre de sortie est relié à une lame mobile en rotation.
